(19) Europäisches Patentamt
European Patent Office
Office européen des brevets

(11) EP 1 561 793 A1

(12) EUROPEAN PATENT APPLICATION
published in accordance with Art. 158(3) EPC

(43) Date of publication:
**10.08.2005 Bulletin 2005/32**

(21) Application number: **03811120.9**

(22) Date of filing: **11.11.2003**

(51) Int Cl.[7]: **C09K 3/00**, C08J 9/14, C08G 18/00

(86) International application number:
**PCT/JP2003/014324**

(87) International publication number:
**WO 2004/044084 (27.05.2004 Gazette 2004/22)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **11.11.2002 JP 2002326829**

(71) Applicant: **Daihachi Chemical Industry Co., Ltd.**
**Osaka-shi, Osaka 541-0046 (JP)**

(72) Inventors:
- **TANAKA, Yoshinori**
  **Habikino-shi, Osaka 583-0852 (JP)**
- **TOKUYASU, Noriaki**
  **Tokai-shi, Aichi 477-0032 (JP)**
- **HIBINO, Yasuo**
  **Shiki-shi, Saitama 353-0006 (JP)**
- **HESAKA, Toshio**
  **Kamifukuoka-shi, Saitama 356-0036 (JP)**

(74) Representative: **Müller-Boré & Partner**
**Patentanwälte**
**Grafinger Strasse 2**
**81671 München (DE)**

# (54) VAPOR PRESSURE DEPRESSANT AND USE THEREOF

(57) A vapor pressure reducing agent for polyurethane foam, comprising at least one compound represented by the following formula (1):

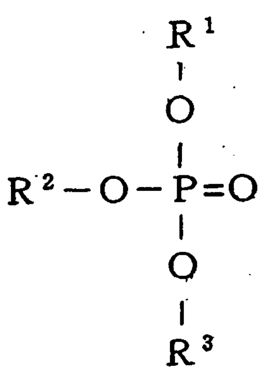

wherein $R^1$, $R^2$ and $R^3$ represent a straight-chain alkyl group or branched-chain alkyl group having 2 to 5 carbon atoms, $R^1$, $R^2$ and $R^3$ may be the same or different, with the proviso that the compound wherein $R^1$, $R^2$ and $R^3$ are all ethyl groups is excluded, the compound having a total acid content of 650 mg KOH or less as measured in accordance with MIL H-19457; and a premix composition for producing polyurethane foam, comprising a polyol, a curing catalyst, 1,1,1,3,3-pentafluoropropane, a foaming stabilizer, and the vapor pressure reducing agent described above.

EP 1 561 793 A1

## Description

### TECHNICAL FIELD

The present invention relates to a composition for reducing vapor pressure of 1,1,1,3,3-pentafluoropropane, a premix composition for polyurethane foam, a method for producing a polyurethane foam, and a method for reducing the vapor pressure of 1,1,1,3,3-pentafluoropropane.

### BACKGROUND ART

Rigid polyurethane foams, including isocyanurate-modified rigid polyurethane foams, are prepared by reacting an isocyanate with a polyol composition in the presence of a foaming agent. Industrialy, polyurethane foams are prepared either through an in-line process, in which foaming and curing are performed by mixing all components at an industrial plant, or through an in-situ process, in which foaming and curing are performed by mixing all components at a construction site or the like. In either case, a premix composition in which a polyol, a curing catalyst, a foaming agent, a foaming stabilizer and other additives are blended and an isocyanate are prepared separately, and then foaming and curing are performed by mixing the premix composition and the isocyanate.
Currently, 1,1-dichloro-1-fluoroethane (HCFC-141b) is used widely as a foaming agent for producing rigid polyurethane foam. This compound, however, is recognized as a transitional substance because it has a moderate ozone-depleting capability, and is due to be totally banned after 2003. And so, 1,1,1,3,3-pentafluoropropane (HFC-245fa), which does not have any chlorine atoms and thus does not have the ozone depleting potential, has been attracting attention as an alternative for HCFC-141b.
HFC-245fa is an excellent foaming agent because it has no flash point, and its minimum ignition energy is higher than 1 x $10^5$mJ. This low flammability characteristic of HFC-245fa is a great advantage, especially for in-situ foaming, where exhaust facilities are often dissatisfactory.
However, HFC-245fa has a low boiling point of 15.3°C, and thus has a high vapor pressure. Accordingly, particularly in summer, HFC-245fa and premix compositions containing HFC-245fa need to be stored or transported in pressurized drums, and require careful handling. Furthermore, since HFC-245fa has no chlorine atoms, it is less compatible with polyol components as compared with HCFC-141b, which has chlorine atoms. Accordingly, the concentration of HFC-245fa in a premix composition is uneven.
Various methods have been proposed for use of HFC-245fa as a foaming agent for producing polyurethane foam. For example, Japanese Unexamined Patent Publication No. 1993-239251 discloses use of HFC-245fa alone or in admixture with another hydrocarbon foaming agent having a low boiling point (paragraphs 0014 and 0015). Japanese Unexamined Patent Publication Nos. 1997-71628 (paragraph 0019), 1998-87774 (paragraph 0011), and 1999-49886 (paragraphs 0009, 0010, 0012, and 0017 to 0019) disclose use of HFC-245fa in admixture with an HFC-based foaming agent, such as 1,1,1,3,3-pentafluorobutane (HFC-365mfc) and 1,1,1,2-tetrafluoroethane (HFC-134a). Further, Japanese Unexamined Patent Publication No. 1999-343326 discloses use of HFC-245fa in admixture with cylopentane and/or cyclohexane (paragraphs 0047 to 0050).
However, even when such foaming agents are used together with HFC-245fa, the vapor pressure of HFC-245fa cannot be lowered.

### DISCLOSURE OF THE INVENTION

An object of the present invention is to provide a vapor pressure lowering agent that can effectively reduce the vapor pressure of HFC-245fa used as a foaming agent, as well as the vapor pressure of a premix composition for polyurethane foam containing HFC-245fa; a premix composition for polyurethane foam comprising the vapor pressure depressant; a method for producing a polyurethane foam using the composition; and a method for reducing the vapor pressure of HFC-245fa.
The present inventors conducted intensive research to achieve the above object, and found the following:

(i) Compounds represented by the following formula (1)

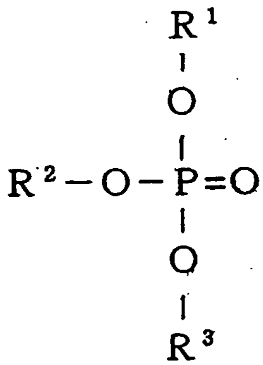

wherein $R^1$, $R^2$ and $R^3$ independently represent a straight-chain alkyl group or branched-chain alkyl group having 2 to 5 carbon atoms, with the proviso that the compound in which $R^1$, $R^2$ and $R^3$ are all ethyl groups is excluded, and having a total acid content of 650 mg KOH or less as measured in accordance with MIL H-19457 can effectively reduce the vapor pressure of HFC-245fa.

(ii) Compounds represented by formula (1) shown above are highly resistant to hydrolysis. When such a compound is incorporated into a premixed composition for producing polyurethane foam that contains water as a foaming aid, the compound is unlikely to be hydrolyzed during storage of the premix composition. Thus, foaming is not impeded or scarcely impeded by acids which are hydrolysates of phosphate esters represented by the formula (1). As a result, by using this premix composition, a well-expanded polyurethane foam can be obtained, and the vapor-pressure-reducing effect are maintained for a long period of time.

The present invention was accomplished based on the findings described above. As shown below, the present invention provides an agent for reducing vapor pressure of 1,1,1,3,3-pentafluoropropane, a premix composition for producing polyurethane foam, a method for producing a polyurethane foam, a method for reducing the vapor pressure of 1,1,1,3,3-pentafluoropropane, a foaming composition and others.

1. An agent for reducing vapor pressure of 1,1,1,3,3-pentafluoropropane, comprising at least one compound represented by the following formula (1):

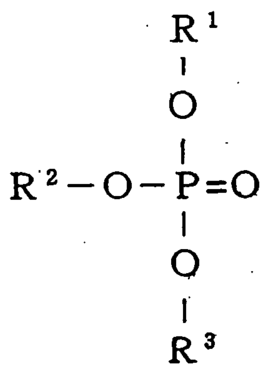

wherein $R^1$, $R^2$ and $R^3$ represent a straight-chain alkyl group or branched-chain alkyl group having 2 to 5 carbon atoms, $R^1$, $R^2$ and $R^3$ may be the same or different, with the proviso that the compound wherein $R^1$, $R^2$ and $R^3$ are all ethyl groups is excluded, the compound having a total acid content of 650 mg KOH or less as measured in accordance with MIL H-19457.
2. The agent according to item 1, wherein the compound represented by formula (1) is at least one species selected from the group consisting of poly-n-propyl phosphate, tri-n-butyl phosphate, tri-n-pentyl phosphate, tri-iso-propyl phosphate, tri-iso-butyl phosphate, tri-sec-butyl phosphate, tri-tert-butyl phosphate, tri-iso-pentyl phosphate, tri-sec-pentyl phosphate, trineopentyl phosphate, ethyldi(n-propyl) phosphate, ethyldi(iso-propyl) phosphate, ethyldi (n-butyl) phosphate, ethyldi(iso-butyl) phosphate, ethyldi(sec-butyl) phosphate, ethyldi(tert-butyl) phosphate, ethyldi(n-pentyl) phosphate, ethyldi(iso-pentyl) phosphate, ethyldi(sec-pentyl) phosphate, ethyldi(neopentyl) phosphate, diethyl-n-propyl phosphate, diethyl-n-butyl phosphate, diethyl-iso-butyl phosphate, diethyl-sec-butyl phosphate, diethyl-tert-butyl phosphate, diethyl-n-pentyl phosphate, diethyl-iso-pentyl phosphate, diethyl-sec-pentyl phosphate, diethylneopentyl phosphate, n-propyldi(iso-propyl) phosphate, di(n-propyl)iso-propyl phosphate, n-propyldi(n-butyl) phosphate, di(n-propyl)n-butyl phosphate, n-propyldi(iso-butyl) phosphate, di(n-propyl)iso-butyl phosphate, n-propyldi(sec-butyl) phosphate, di(n-propyl)sec-butyl phosphate, n-propyldi(tert-butyl) phosphate, di (n-propyl)tert-butyl phosphate, n-propyldi(n-pentyl) phosphate, di(n-propyl)n-pentyl phosphate, n-propyldi(iso-pentyl) phosphate, di(n-propyl)iso-pentyl phosphate, n-propyldi(sec-pentyl) phosphate, di(n-propyl)sec-pentyl phosphate, n-propyldi(neopentyl) phosphate, di(n-propyl)neopentyl phosphate, iso-propyldi(n-butyl) phosphate, di(iso-propyl)n-butyl phosphate, iso-propyldi(iso-butyl) phosphate, di(iso-propyl)iso-butyl phosphate, iso-propyldi (sec-butyl) phosphate, di(iso-propyl)sec-butyl phosphate, iso-propyldi(tert-butyl) phosphate, di(iso-propyl)tert-butyl phosphate, iso-propyldi(n-pentyl) phosphate, di(iso-propyl)n-pentyl phosphate, iso-propyldi(iso-pentyl) phosphate, di(iso-propyl)iso-pentyl phosphate, iso-propyldi(sec-pentyl) phosphate, di(iso-propyl)sec-pentyl phosphate, iso-propyldi(neopentyl) phosphate, di(iso-propyl)neopentyl phosphate, n-butyldi(iso-butyl) phosphate, di(n-butyl) iso-butyl phosphate, n-butyldi(sec-butyl) phosphate, di(n-butyl)sec-butyl phosphate, iso-butyldi(sec-butyl) phosphate, and di(iso-butyl)sec-butyl phosphate.

3. The agent according to item 1, wherein the compound represented by formula (1) is one species selected from the group consisting of tri-n-propyl phosphate, tri-n-butyl phosphate, tri-iso-propyl phosphate, tri-iso-butyl phosphate, tri-sec-butyl phosphate, ethyldi(n-propyl) phosphate, ethyldi(n-butyl) phosphate, ethyldi(iso-butyl) phosphate, ethyldi(sec-butyl) phosphate, n-propyldi(iso-propyl) phosphate, di(n-propyl)iso-propyl phosphate, n-propyldi(n-butyl) phosphate, di(n-propyl)n-butyl phosphate, n-propyldi(iso-butyl) phosphate, di(n-propyl)iso-butyl phosphate, n-propyldi(sec-butyl) phosphate, di(n-propyl)sec-butyl phosphate, iso-propyldi(n-butyl) phosphate, di(iso-propyl)n-butyl phosphate, iso-propyldi(iso-butyl) phosphate, di(iso-propyl)iso-butyl phosphate, iso-propyldi(sec-butyl) phosphate, di(iso-propyl)sec-butyl phosphate, n-butyldi(iso-butyl) phosphate, di(n-butyl)iso-butyl phosphate, n-butyldi(sec-butyl) phosphate, di(n-butyl)sec-butyl phosphate, iso-butyldi(sec-butyl) phosphate, and di(iso-butyl)sec-butyl phosphate.

4. A premix composition for producing polyurethane foam, comprising a polyol, a curing catalyst, 1,1,1,3,3-pentafluoropropane, a foaming stabilizer, and the vapor pressure reducing agent of item 1.

5. The premix composition for producing polyurethane foam according to item 4, further comprising at least one supplemental vapor pressure reducing agent selected from the group consisting of carbonates, ketones, esters, ethers, acetals, nitriles, amides, sulfoxides, and sulfolanes.

6. The premix composition for producing polyurethane foam according to item 5, wherein the supplemental vapor pressure reducing agent is at least one compound selected from the group consisting of dimethylsulfoxide, tetrahydrofuran, 1,3-dioxolane, and dimethoxymethane.

7. The premix composition for producing polyurethane foam according to item 4, further comprising a supplemental foaming agent selected from the group consisting of a hydrocarbon foaming agent, a fluorine-containing hydrocarbon foaming agent, and a fluorine-containing ether foaming agent.

8. The premix composition for producing polyurethane foam according to item 7, wherein the supplemental foaming agent is at least one compound selected from the group consisting of n-pentane, isopentane, cyclopentane, 2-methylpentane, 3-methylpentane, n-hexane, cyclohexane, 1,1,1,3,3-pentafluorobutane, methoxy-heptafluoropropane, and methoxy-1,1,2,2-tetrafluoroethane.

9. The premix composition for producing polyurethane foam according to item 4, further comprising water.

10. A method for producing a polyurethane foam, comprising the step of mixing a polyisocyanate with the premix composition according to item 4 to form a polyurethane foam.

11. The method for producing a polyurethane foam according to item 10, wherein the premix composition for producing polyurethane foam further comprises at least one supplemental vapor pressure reducing agent selected from the group consisting of carbonates, ketones, esters, ethers, acetals, nitriles, amides, sulfoxides, and sulfolanes.

12. The method for producing a polyurethane foam according to item 11, wherein the supplemental vapor pressure reducing agent is at least one compound selected from the group consisting of dimethylsulfoxide, tetrahydrofuran, 1,3-dioxolane, and dimethoxymethane.

13. The method for producing a polyurethane foam according to item 10, wherein the premix composition for producing polyurethane foam further comprises at least one supplemental foaming agent selected from the group consisting of a hydrocarbon foaming agent, a fluorine-containing hydrocarbon foaming agent, and a fluorine-containing ether foaming agent.

14. The method for producing a polyurethane foam according to item 13, wherein the supplemental foaming agent is at least one compound selected from the group consisting of n-pentane, isopentane, cyclopentane, 2-methylpentane, 3-methylpentane, n-hexane, cyclohexane, 1,1,1,3,3-pentafluorobutane, methoxy-heptafluoropropane, and methoxy-1,1,2,2-tetrafluoroethane.

15. The method for producing a polyurethane foam according to item 10, wherein the premix composition for producing polyurethane foam further comprises water.
16. A foaming composition comprising: (A) 1,1,1,3,3-pentafluoropropane; and (B) at least one compound represented by the following formula (1):

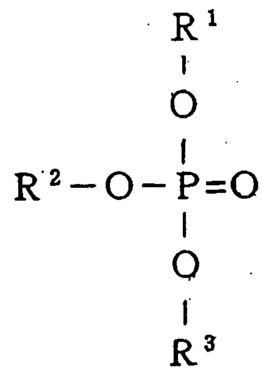

wherein $R^1$, $R^2$ and $R^3$ represent a straight-chain alkyl group or branched-chain alkyl group having 2 to 5 carbon atoms, $R^1$, $R^2$ and $R^3$ may be the same or different, with the proviso that the compound wherein $R^1$, $R^2$ and $R^3$ are all ethyl groups is excluded, the compound having a total acid content of 650 mg KOH or less as measured in accordance with MIL H-19457.
17. A 1,1,1,3,3-pentafluoropropane vapor pressure reducing composition, comprising:

a compound represented by the following formula (1):

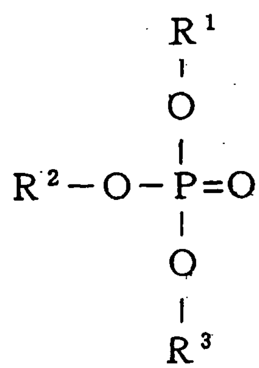

wherein $R^1$, $R^2$ and $R^3$ represent a straight-chain alkyl group or branched-chain alkyl group, $R^1$, $R^2$ and $R^3$ may be the same or different, with the proviso that the compound wherein $R^1$, $R^2$ and $R^3$ are all ethyl groups is excluded, the compound having a total acid content of 650 mg KOH or less as measured in accordance with MIL H-19457; and

at least one supplemental vapor pressure reducing agent selected from the group consisting of carbonates, ketones, esters, ethers, acetals, nitriles, amides, sulfoxides, and sulfolanes.
18. The composition according to item 17, wherein the supplemental vapor pressure reducing agent is at least one compound selected from the group consisting of dimethylsulfoxide, tetrahydrofuran, 1,3-dioxolane, and dimethoxymethane.
19. The composition according to item 17, wherein the supplemental vapor pressure reducing agent is contained in an amount of 0.1 to 100 parts by weight per 100 parts by weight of the compound represented by formula (1) .
20. Use of a compound as a depressant for reducing vapor pressure of 1,1,1,3,3-pentafluoropropane, the compound being represented by the following formula (1):

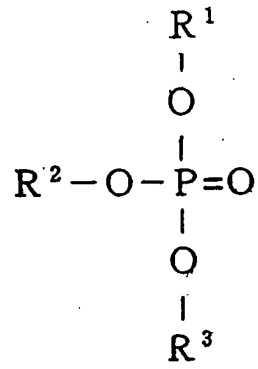

wherein $R^1$, $R^2$ and $R^3$ represent a straight-chain alkyl group or branched-chain alkyl group having 2 to 5 carbon atoms, $R^1$, $R^2$ and $R^3$ may be the same or different, with the proviso that the compound wherein $R^1$, $R^2$ and $R^3$ are all ethyl groups is excluded, and the compound having a total acid content of 650 mg KOH or less as measured in accordance with MIL H-19457.

21. A method for reducing the vapor pressure of 1,1,1,3,3-pentafluoropropane, comprising mixing 1,1,1,3,3-pentafluoropropane with at least one compound represented by the following formula (1):

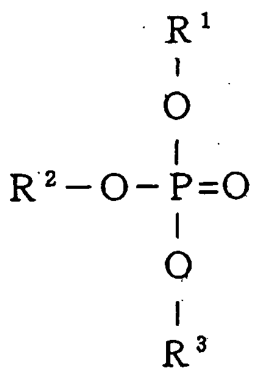

wherein $R^1$, $R^2$ and $R^3$ represent a straight-chain alkyl group or branched-chain alkyl group having 2 to 5 carbon atoms, $R^1$, $R^2$ and $R^3$ may be the same or different, with the proviso that the compound wherein $R^1$, $R^2$ and $R^3$ are all ethyl groups is excluded, the compound having a total acid content of 650 mg KOH or less as measured in accordance with MIL H-19457.

The present invention provides a vapor pressure depressant, or a vapor pressure reductant that can effectively lower the vapor pressure of HFC-245fa used as a foaming agent, as well as the vapor pressure of a premix composition for forming polyurethane foam containing HFC-245fa; a premix composition for forming polyurethane foam comprising the vapor pressure depressant ; a method for producing a polyurethane foam using the composition; a method for effectively reducing the vapor pressure of HFC-245fa; and a foaming composition whose vapor pressure is sufficiently lowered for practical use.

In more detail, the vapor pressure depressant of the present invention effectively reduces the vapor pressure of HFC-245fa. Accordingly, the vapor pressure depressant of the present invention, as well as a premix composition comprising the depressant , can be handled easily during storage or transportation.

The vapor pressure depressant of the present invention is highly resistant to hydrolysis, and, therefore, is unlikely to be hydrolyzed even when added into a premix composition that contains water as an inexpensive foaming aid. As a result, foaming is not hindered or scarcely inhibited by acids which are hydrolysates of the vapor pressure depressant , and the effect of the vapor pressure depressant is maintained over a long period of time. Additionally, a premix composition comprising the vapor pressure depressant of the present invention is stable, and can be preserved over a long time. Phase separation or precipitation does not be caused by the above mentioned acids. Furthermore, the vapor pressure depressant of the present invention itself functions as a flame retardant. Since it is resistant to hydrolysis in a premix composition, a polyurethane foam having practically sufficient flame retardancy can be obtained. Because phase separation or precipitation by acids is unlikely to occur, a polyurethane foam having practically satisfactory mechanical properties are obtained.

HFC-245fa containing no chlorine atoms is less miscible with polyol components as compared with HCFC-141b containing chlorine atoms. As a result, concentrations of HCFC-141b in premix compositions occasionally become ununiform. In contrast, the vapor pressure reductant of the present invention is capable of increasing the solubility of HFC-245fa in polyols to form a homogeneous premix composition.

Heretofore, halogenated hydrocarbon HCFC-141b and the like have been used as a foaming agent. However, these compounds containing chlorine atoms are undesirable in view of environmental protection. Alternatively, HFC-365mfc is used as a foaming agent which does not contain chlorine. However, this compound having a very low flash point of -27°C, is difficult to be used even in combination with a flame retardant, particularly in the case of in-situ foaming without well-established exhaust facilities. In contrast, HFC-245fa containing no chlorine atoms and showing no flash point is a desirable foaming agent.

Use of the vapor pressure depressant according to the invention overcomes the disadvantage of HFC-245fa, i.e., high vapor pressure, and widens applications of HFC-245fa which has no chlorine atoms and has no flash point.

DETAILED DESCRIPTION OF THE INVENTION

The present invention will be described below in further detail.

(1) Vapor pressure reducing agent

Fundamental constitution

The vapor pressure reducing agent for HFC-245fa according to the present invention comprises at least one compound represented by the following formula (1):

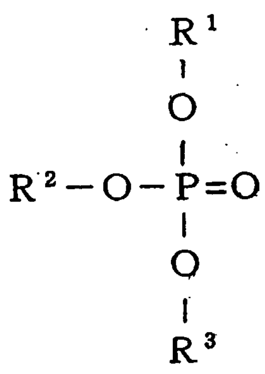

wherein $R^1$, $R^2$ and $R^3$ represent a straight-chain alkyl group or branched-chain alkyl group, $R^1$, $R^2$ and $R^3$ may be the same or different, with the proviso that the compound
wherein $R^1$, $R^2$ and $R^3$ are all ethyl groups is excluded, the compound having a total acid content of 650 mg KOH or less as measured in accordance with MIL H-19457.

The agent for lowering vapor pressure of the invention can effectively reduce the vapor pressure of HFC-245fa, which is widely used as a highly flame-resistant foaming agent. Further, because this vapor pressure depressant is hardly hydrolyzed, forming is substantially unaffected by hydrolysates even when the depressant is added to a premix composition for polyurethane foam that contains water as a foaming aid, and the vapor-pressure-reducing effect is maintained for a long time. Therefore, a premix composition which is stable over a prolonged period is obtained. The vapor pressure depressant also exhibits excellent flame retardancy, and thus may also be used as a flame retardant. Furthermore, while HFC-245fa has a low solubility in polyols, the vapor pressure depressant increases the solubility of HFC-245fa in polyols to give an uniform premix composition.

Total acid content is a numerical value representing the susceptibility of a phosphate ester compound to hydrolysis. The higher the value, the more easily ester bonds are cleaved, producing acids. The total acid content in the present invention, as describe above, indicates an amount of acids measured in accordance with MIL (Military Standard) H-19457, as explained in greater below.

In a pressure-resistant sample bottle are fed 75 g of a sample compound and 25 g of distilled water, and the bottle is sealed hermetically. The bottle is attached to a hydrolysis apparatus that is preset to 93°C and rotated 5 times per minute to mix the contents in the sample bottle. Then, the sample bottle is maintained at the same temperature for 48 hours, followed by cooling to room temperature. Subsequently, the mixture in the pressure-resistant sample

bottle is transferred into a separatory funnel, left to stand, and the aqueous phase is collected. Then, about 100 g of distilled water is added to the oil phase as rinse water, gently shaked, and is left to stand. Thereafter, the aqueous phase is collected, and then mixed with the aqueous phase previously collected. The above procedure is repeated until the rinse water becomes neutral. The acid value of the mixture of all the aqueous phases collected is determined.

The acid value is calculated by the formula shown below, based on titer A (ml), i.e., the amount of a 0.5 N potassium hydroxide solution required to produce a red color when a sample S(g) from the total aqueous phase is titrated with 0.5 N potassium hydroxide solution using a phenolphthalein indicator.

$$\text{Acid value (mg KOH/g)} = 0.5 \times 56.1 \times A / S$$

The total acid content is then calculated by the following formula:

$$\text{Total acid content (mg KOH)} =$$

$$\text{Acid value (mg KOH/g)} \times W \text{ (g)}$$

wherein W represents the total weight of the all aqueous phases collected.

The vapor pressure reducing agent of the invention has a total acid content of 650 mg KOH or less. Thus, even when it is present in a premix composition that contains water as a foaming aid, it is scarcely hydrolyzed by water during storage of the premix composition. Therefore, by using the vapor pressure reducing agent of the present invention, foaming reaction is not affected or scarcely affected by acids which would otherwise be produced by hydrolysis of a phosphate ester compound, and a premix composition for producing polyurethane foam with practically satisfactory foaming properties can be obtained. This premix composition does not undergo phase separation or precipitation caused by acids, and as a result, a polyurethane foam that has practically sufficient flame retardancy, as well as practically sufficient mechanical properties can be obtained.

As easily understood from the above, vapor pressure depressant of HFC-245fa according to the invention may be suitably used as a vapor pressure depressant for polyurethane foam, more suitably as a vapor pressure depressant to be incorporated into a premix composition for polyurethane foam, and even more suitably as a vapor pressure depressant to be incorporated into a premix composition for polyurethane foam used for in-situ foaming at construction sites or the like. More specifically, the vapor pressure depressant of the invention is usefull as a vapor pressure reducing component to be incorporated into a premix composition for polyurethane foam that contains 1,1,1,3,3-pentafluoropropane as a foaming agent, and especially useful as a vapor pressure reducing component to be incorporated into a premix composition for polyurethane foam that contains 1,1,1,3,3-pentafluoropropane as a foaming agent and water as a foaming aid.

The total acid content of the phosphate ester compound used in the present invention is preferably 500 mg KOH or less, and more preferably 350 mg KOH or less. It is desirable that the total acid content is as low as possible.

<u>Preferable vapor pressure reducing agent</u>

The vapor pressure reducing agent of the invention has the property of increasing the solubility of HFC-245fa in a polyol component. Among the vapor pressure depressants , the vapor pressure depressants that are compatible with both polyols and HFC-245fa, and that have a high boiling point, i.e., can reduce the vapor pressure are preferable.

As described above, the phosphate ester compound of the present invention may be that having three identical alkyl groups ($R^1$, $R^2$ and $R^3$) i.e., single phosphate-ester compound (but excluding the phosphate ester compound whose $R^1$, $R^2$ and $R^3$ are ethyl groups), or may be that having alkyl groups, at least one of which being different from others, i.e., phosphate-ester compound having mixed alcohol residues.

The straight-chain or branched-chain alkyl groups having 2 to 5 carbon atoms in formula (1) include straight-chain alkyl groups such as ethyl, n-propyl, n-butyl, n-pentyl and the like; and branched-chain alkyl groups such as iso-propyl, iso-butyl, sec-butyl, tert-butyl, iso-pentyl, sec-pentyl, neopentyl and the like. Among these groups, ethyl, n-propyl, n-butyl, iso-propyl, sec-butyl and iso-butyl are preferable.

Specific examples of compounds represented by formula (1) and having a total acid content of 650 mg KOH or less as measured in accordance with MIL H-19457 are listed below. Examples of single-phosphate ester compounds include tri($C_3$ to $C_5$ alkyl) phosphates, such as tri-n-propyl phosphate, tri-n-butyl phosphate, tri-n-pentyl phosphate, tri-iso-propyl phosphate, tri-iso-butyl phosphate, tri-sec-butyl phosphate, tri-tert-butyl phosphate, tri-iso-pentyl phosphate, tri-sec-pentyl phosphate, trineopentyl phosphate and the like.

Examples of phosphate-ester compounds having mixed alcohol residues include ethyldi(n-propyl) phosphate,

ethyldi (iso-propyl) phosphate, ethyldi(n-butyl) phosphate, ethyldi(iso-butyl) phosphate, ethyldi(sec-butyl) phosphate, ethyldi(tert-butyl) phosphate, ethyldi(n-pentyl) phosphate, ethyldi(iso-pentyl) phosphate, ethyldi(sec-pentyl) phosphate, ethyldi(neopentyl) phosphate, diethyl-n-propyl phosphate, diethyl-n-butyl phosphate, diethyl-iso-butyl phosphate, diethyl-sec-butyl phosphate, diethyl-tert-butyl phosphate, diethyl-n-pentyl phosphate, diethyl-iso-pentyl phosphate, diethyl-sec-pentyl phosphate, diethylneopentyl phosphate, n-propyldi(iso-propyl) phosphate, di(n-propyl)isopropyl phosphate, n-propyldi(n-butyl) phosphate, di(n-propyl)n-butyl phosphate, n-propyldi (iso-butyl) phosphate, di(n-propyl)iso-butyl phosphate, n-propyldi(sec-butyl) phosphate, di(n-propyl)sec-butyl phosphate, n-propyldi(tert-butyl) phosphate, di(n-propyl)tert-butyl phosphate, n-propyldi(n-pentyl) phosphate, di(n-propyl)n-pentyl phosphate, n-propyldi(iso-pentyl) phosphate, di(n-propyl)iso-pentyl phosphate, n-propyldi(sec-pentyl) phosphate, di(n-propyl)sec-pentyl phosphate, n-propyldi(neopentyl) phosphate, di(n-propyl)neopentyl phosphate, iso-propyldi(n-butyl) phosphate, di(iso-propyl)n-butyl phosphate, iso-propyldi(iso-butyl) phosphate, di(iso-propyl)iso-butyl phosphate, iso-propyldi(sec-butyl) phosphate, di(iso-propyl)sec-butyl phosphate, iso-propyldi(tert-butyl) phosphate, di(iso-propyl)tert-butyl phosphate, iso-propyldi(n-pentyl) phosphate, di(iso-propyl)n-pentyl phosphate, iso-propyldi(iso-pentyl) phosphate, di(iso-propyl) iso-pentyl phosphate, iso-propyldi(sec-pentyl) phosphate, di(iso-propyl)sec-pentyl phosphate, iso-propyldi(neopentyl) phosphate, di(iso-propyl)neopentyl phosphate, n-butyldi(iso-butyl) phosphate, di(n-butyl)iso-butyl phosphate, n-butyldi (sec-butyl) phosphate, di(n-butyl)sec-butyl phosphate, iso-butyldi(sec-butyl) phosphate, di(iso-butyl)sec-butyl phosphate and the like.

In view of the fact that basic compounds are generally used as curing catalysts, the above compounds are preferable in the point that they do not affect the curing reaction because they are stable against bases.

Among them, preferable examples are those compounds in which, in formula (1), $R^1$, $R^2$ and $R^3$ each represent an alkyl group having 2 to 4 carbon atoms, including tri-n-propyl phosphate, tri-n-butyl phosphate, tri-iso-propyl phosphate, tri-iso-butyl phosphate, tri-sec-butyl phosphate, ethyldi(n-propyl) phosphate, ethyldi(n-butyl) phosphate, ethyldi (iso-butyl) phosphate, ethyldi(sec-butyl) phosphate, n-propyldi(iso-propyl) phosphate, di(n-propyl)iso-propyl phosphate, n-propyldi(n-butyl) phosphate, di(n-propyl)n-butyl phosphate, n-propyldi(iso-butyl)phosphate, di(n-propyl)isobutyl phosphate, n-propyldi(sec-butyl) phosphate, di(n-propyl)sec-butyl phosphate, iso-propyldi(n-butyl) phosphate, di (iso-propyl)n-butyl phosphate, iso-propyldi(iso-butyl) phosphate, di(iso-propyl)iso-butyl phosphate, iso-propyldi(secbutyl) phosphate, di(iso-propyl)sec-butyl phosphate, n-butyldi(iso-butyl) phosphate, di(n-butyl)iso-butyl phosphate, n-butyldi(sec-butyl) phosphate, di(n-butyl)sec-butyl phosphate, iso-butyldi (sec-butyl) phosphate, and di(iso-butyl)secbutyl phosphate.

More preferable examples are tri-n-propyl phosphate, tri-n-butyl phosphate, tri-iso-butyl phosphate, tri-secbutyl phosphate, ethyldi(n-butyl) phosphate, ethyldi(iso-butyl) phosphate, ethyldi(sec-butyl) phosphate, di(n-propyl) iso-propyl phosphate, n-propyldi(n-butyl) phosphate, di(n-propyl)n-butyl phosphate, n-propyldi(iso-butyl) phosphate, di(n-propyl)iso-butyl phosphate, n-propyldi(sec-butyl) phosphate, di(n-propyl)sec-butyl phosphate, iso-propyldi(n-butyl) phosphate, iso-propyldi(iso-butyl) phosphate, iso-propyldi(sec-butyl) phosphate, n-butyldi(iso-butyl) phosphate, di(n-butyl)iso-butyl phosphate, n-butyldi(sec-butyl) phosphate, di(n-butyl)sec-butyl phosphate, iso-butyldi(sec-butyl) phosphate, and di(iso-butyl)sec-butyl phosphate.

Further more preferable examples are tri-n-propyl phosphate, tri-iso-butyl phosphate, ethyldi(n-butyl) phosphate, ethyldi(iso-butyl) phosphate, di(n-propyl)iso-propyl phosphate, n-propyldi(n-butyl) phosphate, di(n-propyl)n-butyl phosphate, n-propyldi(iso-butyl) phosphate, di(n-propyl)iso-butyl phosphate, iso-propyldi(n-butyl) phosphate, and iso-propyldi(iso-butyl) phosphate.

Most preferable examples are tri-n-propyl phosphate and tri-iso-butyl phosphate.

Vapor pressure depressants of the present invention can be used either alone or in combination of two or more.

In the compounds represented by formula (1), if the number of carbon atoms in the alkyl groups denoted by $R^1$, $R^2$ and $R^3$ is excessively large, the resistance of the compound to hydrolysis is improved, while the mechanical properties of the resin may be deteriorated. On the other hand, if the number of carbon atoms in the alkyl groups is excessively small, the resistance of the compound to hydrolysis is reduced. These problems do not arise insofar as the number of carbon atoms falls within the range specified above.

(2) Premix composition for polyurethane foam

Fundamental constitution

The premixed composition for producing polyurethane foam of the present invention comprises HFC-245fa as a foaming agent, and the vapor pressure depressant according to the invention. More specifically, it is a composition which comprises a polyol, a curing catalyst, HFC-245fa, a foaming stabilizer, and the vapor pressure depressant of the present invention.

The premix composition of the invention, although containing as a foaming agent HFC-245fa having a high vapor pressure, can alleviate inconveniences that may arise due to the high vapor pressure, because it contains the

vapor pressure reductant comprising a specific phosphate ester compound having excellent hydrolytic resistance as a HFC-245fa vapor pressure depressant.

Known depressants used for reducing vapor pressure of HFC-245fa are liable to be hydrolyzed, and the foaming reaction is occasionally hindered by hydrolysates resulting from the depressants in the presence of water which is an inexpensive foaming aid. In contrast, the vapor pressure depressant of the invention is excellent in hydrolytic resistance and, the foaming reaction suffers no or almost no interference by hydrolysates, even when a large amount of water is used as the foaming aid. Therefore the depressant of the present invention can be added to a premix composition for polyurethane foam that contains water as inexpensive foaming aid.

Polyol

The polyol to be used is not particularly limited, and may be selected from a wide variety of polyols known as raw materials for polyurethane resins. Examples of known polyols include polyether polyols, polyester polyols, polymer polyols, phenol-based polyols, etc.

Examples of polyether polyols include polyhydric alcohols having 2 to 15 carbon atoms and 2 to 8 OH groups, such as glycol, glycerol, pentaerythritol, trimethylolpropane, sorbitol, sucrose bisphenol A and the like; and polymer polyols obtained by adding 2 to 100 molecules of alkylene oxides, such as ethylene oxide, propylene oxide butylene oxide or the like, to one or more aliphatic amine compounds, such as ammonia or ethylenediamine, and/or aromatic amine compounds, such as toluenediamine, diphenylmethane-4,4'-diamine or the like.

Examples of polyester polyols include compounds derived from a dibasic acid and a polyhydric alcohol having 2 to 15 carbon atoms and 2 to 8 OH groups; such as adipic acid, terephthalic acid, isophthalic acid, phthalic anhydride, dimethyl terephthalate polyethylene terephthalate and the like. Also usable are lactone-based polyester polyols obtained by ring-opening polymerization of cyclic esters, such as ε-caprolactone, etc.

Examples of phenol-based polyols include polyols obtained by reacting alkylene oxide with novolak resin or resole resin obtained from phenol and formaldehyde.

To reduce the vapor pressure of HFC-245fa, it is preferable to use a polyol that dissolves a large amount of HFC-245fa. Such a polyol can more effctively reduce the vapor pressure of HFC-245fa.

Polyols can be used either alone or in combination of two or more.

Curing catalyst

The curing catalyst to be used may be selected without limitation from compounds known as curing catalysts for polyurethane resins. Examples of such known catalysts are amine catalysts, such as trimethylamine, triethylamine, triethylenediamine, tetramethylhexamethylenediamine, hexamethylethylenediamine, pentamethyldiethylenetriamine, N-methylmorpholine, N-ethylmorpholine, DBU(1,8-diazabicyclo[5,4,0]undece-7-ene), trimethylaminoethylpiperazine, N,N-dimethylaminoethylether, pentamethyldiethylenetriamine N,N-dimethylcyclohexylamine, tetramethylhexamethylenediamineand and the like; reactive-type amine catalysts having at least one hydroxyl group per molecule, such as dimethylaminohexanol, dimethylaminoethoxyethanol, trimethylaminoethylethanolamine, quaternary ammonium salts and the like.

Known curing catalysts also include organometallic catalysts, such as dibutyltin dilaureate, tin laureate dichloride, dibutyltin diacetate, zinc octoate, tin octoate, potassium octoate, potassium acetate, cobalt naphthenate, nickel naphthenate and the like.

Curing catalysts can used either alone or in combination of two or more.

Although the amount of curing catalyst to be used may vary depending on the foaming conditions, it is preferably about 0.01 to about 10 parts by weight, and more preferably about 0.1 to about 5 parts by weight, per 100 parts by weight of the polyol. When the amount of curing catalyst is within the above range, favorable gelation-time and rise-time are achieved, preventing dripping of the polyurethane composition, and leading to excellent workability. Further, the rate of the curing reaction is not excessively high, which also contributes to excellent workability.

Foaming agent

HFC-245fa is used as the foaming agent.

The amount of HFC-245fa to be used may vary according to the usages of the molded polyurethane foam product, the type of the polyol, foaming stabilizer, curing catalyst and other additives, the type of the vapor pressure depressant, etc. The amount is preferably about 5 to about 80 parts by weight, and more preferably about 10 to about 60 parts by weight, per 100 parts by weight of the polyol.

Supplemental foaming agent

The premix composition of the present invention may further contain, as a supplemental foaming agent, a low-molecular-weight compound with a molecular weight of about 50 to about 200 whose boiling point is higher than that of HFC-245fa, especially higher than 20°C. By using such a supplemental foaming agent together with a foaming agent, the amount of HFC-245fa can be reduced, thus the amount of vapor pressure depressant can be reduced. Although depending on the type of the supplemental foaming agent, use of a supplemental foaming agent having a molecular weight in the range specified above in combination with HFC-245fa lowers the vapor pressure of HFC-245fa because the supplemental foaming agent has excellent miscibility with HFC-245fa. Supplemental foaming agents can be used either alone or in combination.

Examples of such supplemental foaming agents are hydrocarbon foaming agents having 5 or 6 carbon atoms, such as n-pentane, isopentane, cyclopentane, 2-methylpentane, 3-methylpentane, n-hexane, cyclohexane and the like; fluorine-containing hydrocarbon foaming agents, such as 1,1,1,3,3-pentafluorobutane (HFC-365mfc), 1,1,1,2-tetrafluoroethane (HFC-134a) 1,1,1,3,3,3-hexafluoropropene (R-236fa) and the like; and fluorine-containing ether foaming agents, such as methoxy heptafluoropropane ($CF_3CF_2CF_2OCH_3$), methoxy-1,1,2,2-tetrafluoroethane ($CHF_2CF_2OCH_3$), methoxy-3,3,3-trifluoropropene and the like.

Preferable are n-pentane, isopentane, cyclopentane, 2-methylpentane, 3-methylpentane, n-hexane, cyclohexane, 1,1,1,3,3-pentafluorobutane, methoxy-heptafluoropropane and methoxy-1,1,2,2-tetrafluoroethane. Among them, more preferable are 1,1,1,3,3-pentafluorobutane, methoxy-heptafluoropropane and methoxy-1,1,2,2-tetrafluoroethane, which are fluorine-containing hydrocarbon foaming agents. Most preferable is 1,1,1,3,3-pentafluorobutane (HFC-365mfc). These compounds having low viscosity can reduce the viscosity of the premix composition, resulting in an improvement in workability.

Methoxy-3,3,3-trifluoropropene can be easily obtained by reacting 1-chloro-3,3,3-trifluoropropene and methanol in the presence of an alkali catalyst.

When a supplemental foaming agent is used, its amount is preferably about 1 to about 80 parts by weight, more preferably about 1 to about 50 parts by weight, and further more preferably about 1 to about 30 parts by weight, per 100 parts by weight of the foaming agent (HFC-245fa) .

Foaming aid

The premix composition of the present invention may optionally contain a foaming aid. Water is preferably used as the foaming aid. Water is inexpensive, and allows to form a polyurethane foam having excellent dimensional stability and heat resistance. However, when only water is used as a foaming agent, an excessive amount of heat may be generated during the foaming reaction, or the viscosity of the premix composition may be increased, both of which deteriorate workability. When water is used as the foaming aid, its amount is preferably about 0.01 to about 5 parts by weight, and more preferably about 0.1 to about 3 parts by weight, per 100 parts by weight of the polyol.

Foaming stabilizer

The foaming stabilizer or cell stabilizer may be selected without limitation from a wide variety of compounds known as foaming stabilizers for polyurethane resins. For example, surfactants containing organosilicon compounds may be used, more specifically those including alkylene-oxide-modified polyorganosiloxanes having alkoxy groups, active OH groups, or acyl groups at terminal. Such surfactants containing organosilicon compounds may be those commercially available. Specific examples of such commercially available surfactants include SH-193, SH-195, SH-200 and SRX-253, manufactured by Toray Silicone Co., Ltd.; F-230, F-305, F-341 and F-348, manufactured by Shin-Etsu Silicone Co., Ltd.; L-544, L-5310, L-5320, L-5420 and L-5720, manufactured by Nippon Unicar Co., Ltd.; and TFA-4200 and TFA-4202, manufactured by Toshiba Silicones Co., Ltd.

The amount of foaming stabilizer to be used is preferably about 0.05 to 5 parts by weight, and more preferably about 0.1 to 3 parts by weight, per 100 parts by weight of the polyol. A excellent foam-stabilizing effect can be achieved when the amount is within the above range.

Vapor pressure reducing agent

The vapor pressure depressant of the present invention, which is described earlier, is used for lowering vapor pressure of HFC-245fa.

The amount of the vapor pressure depressant of the invention is preferably about 0.1 to about 80 parts by weight, more preferably about 1 to about 50 parts by weight, and even more preferably about 5 to about 45 parts by weight, per 100 parts by weight of the foaming agent (HFC-245fa). When the depressant is used within the above

range, the vapor pressure of the premix composition can be reduced to a level that is sufficiently low for practice use, without impairing the properties of the polyurethane foam.

Supplemental vapor pressure reducing agent

The premix composition of the invention may contain a supplemental vapor pressure reducing agent in addition to the vapor pressure reducing agent of the invention.
Examples of the supplemental vapor pressure reductants include compounds containing heteroatoms such as oxygen, phosphorus, sulfur atoms, etc. Specifically, examples of the compounds include carbonates, ketones, esters, ethers, acetals, nitriles, amides, sulfoxides, sulfolanes and the like.
Examples of carbonates are di($C_1$ to $C_3$)alkyl carbonates, such as dimethyl carbonate, diethyl carbonate, etc.
Examples of ketones are di($C_1$ to $C_3$)alkyl ketones, such as acetone, methyl ethyl ketone, diethyl ketone, etc; and cyclic ketones having 5 to 6 carbon atoms, such as cyclohexanone, etc.
Examples of ethers are linear ethers having 2 to 8 carbon atoms, and preferably 5 to 8 carbon atoms, such as dibutyl ether, t-butyl methyl ether, 1,2-dimethoxyethane, etc; and cyclic ethers having 4 to 6 carbon atoms, such as furan, tetrahydrofuran, tetrahydropyran, etc.
Examples of acetals are linear or cyclic acetals having 3 to 6 carbon atoms, such as dimethoxymethane, diethoxymethane, 1,1-dimethoxyethane, 1,1-diethoxyethane, 2,2-dimethoxypropane, 1,3-dioxolane, etc.
Examples of esters include acetate esters whose alcohol residues have 1 to 4 carbon atoms, such as methyl acetate, ethyl acetate, n-propyl acetate, n-butyl acetate, etc; cyclic esters having 4 to 6 carbon atoms, such as γ-butyrolactone, γ-caprolactone, γ-valerolactone, δ-valerolactone, etc; and phosphate esters having 3 to 18 carbon atoms, such as tris(2-chloroethyl) phosphate, tris(2-chloropropyl) phosphate, tris(butoxyethyl) phosphate, trimethyl phosphate, triethyl phosphate, triphenyl phosphate, tris(isopropylphenyl) phosphate, etc. However, compounds represented by the above-mentioned formula (1) are excluded from examples of esters as supplemental vapor pressure depressant.
Examples of nitriles include acetonitrile, propionitrile, butyronitrile, etc.
Examples of amides include acetamide, N,N-dimethylformamide, N,N-diethylformamide, N,N-dimethylacetamide, N,N-diethylacetamide, 2-pyrrolidone, N-methyl-2-pyrrolidone, etc.
Examples of sulfoxides include sulfoxide, dimethylsulfoxide, diethylsulfoxide, etc.
Examples of usable sulfolanes include sulfolane, 3-methylsulfolane, etc.
Among the above-mentioned examples, sulfoxides, ethers and acetals are preferable, and dimethylsulfoxide, tetrahydrofuran, 1,3-dioxolane and dimethoxymethane are more preferable.
Since these supplemental vapor pressure depressants are not basic, they do not, or hardly, affect the curing reaction when an amine catalyst is used as a curing catalyst. Furthermore, since they are stable against bases, a basic catalyst can be used as a curing catalyst.
Among the above-exemplified compounds, preferable are tri-n-propyl phosphate or triisobutyl phosphate; and dimethylsulfoxide, tetrahydrofuran, 1,3-dioxolane, dimethoxymethane, etc.
When a supplemental vapor pressure depressant is used together with the vapor pressure depressant, its amount is preferably about 0.1 to about 80 parts by weight, more preferably about 1 to about 50 parts by weight, and further more preferably about 1 to about 40 parts by weight, per 100 parts by weight of the foaming agent (HFC-245fa) .
Additionally, the amount of the supplemental vapor pressure depressant is preferably about 0.1 to about 100 parts by weight, more preferably about 1 to about 90 parts by weight, and further more preferably about 10 to about 80 parts by weight, per 100 parts by weight of the vapor pressure depressant.
Preferable combinations of vapor pressure depressant and supplemental vapor pressure depressant are, for example, a combination of tri-n-propyl phosphate or triisobutyl phosphate, and at least one of dimethylsulfoxide, tetrahydrofuran, 1,3-dioxolane and dimethoxymethane.
The vapor pressure depressant may be mixed with the polyol concurrently with other components. It is also possible to premix the vapor pressure depressant with the polyol, foaming agent, foaming stabilizer, flame retardant, curing catalyst, etc.

Flame retardant

The premix composition of the invention does not necessarily require a separate flame retardant, because the vapor pressure depressant of the present invention itself has flame retardancy. Among the vapor pressure reductant of the invention, tri-n-propyl phosphate, triisobutyl phosphate and like compounds have excellent flame retardancy. When these compounds are used as vapor pressure depressant, the flame retardancy of the resulting polyurethane foam is extremely enhanced.
If required, the premix composition may separately contain, as a flame retardant, one or more members selected from the compounds known as flame retardants for rigid polyurethane foams. Examples of known flame

retardants for rigid polyurethane foams include organic phosphorous compounds, such as tris(2-chloroethyl) phosphate, tris(2-chloropropyl) phosphate, tris(butoxyethyl) phosphate, trimethyl phosphate, triethyl phosphate, triphenyl phosphate, tris(isopropylphenyl) phosphate, tricresyl phosphate, cresyl diphenyl phosphate, tris(2-ethylhexyl) phosphate and the like; nitrogen-containing compounds, such as melamine, benzoguanamine, urea, ammonium polyphosphate, ammonium pyrophosphate and the like; and metal compounds, such as aluminum hydroxide, magnesium hydroxide, zinc borate and the like.

Other components

If necessary, the premix composition of the present invention may further contain other additives, insofar as they do not impair the properties of the polyurethane foam to be obtained.
Examples of other additives include surfactants, decomposition inhibitors for HFC-245fa (stabilizers for HFC-245fa), antioxidants, viscosity reducers, inorganic fillers, antistatic agents, UV absorbers, lubricants, etc.
A surfactant may be added in order to enhance solubility of HFC-245fa into the premix composition. The surfactant may be selected, for example, from known hydrocarbon or fluorine-containing surfactants.
Examples of decomposition inhibitors for HFC-245fa include $\alpha$-methyl styrene, isopropenyltoluene, etc.
Examples of antioxidants include trivalent phosphorus compounds, such as triphenyl phosphite, tris(nonylphenyl) phosphite, diphenylisodecyl phosphite, bis(2,4-di-tert-butylphenyl)pentaerythritol diphosphite, tetrakis(2,4-di-tert-butylphenyl)-4,4-diphenylene phosphonite, etc; hydroquinone compounds such as hydroquinone, 2,5-di-tert-butylhydroquinone, octylhydroquinone, 2,5-di-tert-amylhydroquinone, etc; phenol-based compounds; amine-based compounds; and sulfur-based compounds.
Examples of viscosity reducers include phthalic acid esters, dibasic fatty acid esters, trimellitic acid esters, glycerol esters and the like.
Examples of inorganic fillers include mica, talc, alumina and the like.
Examples of antistatic agents include cationic surfactants and nonionic surfactants.
Examples of UV absorbers include benzophenone compounds, salicylate compounds, benzotriazole compounds and the like.
Examples of lubricants include fatty acid compounds, aliphatic amide compounds, ester compounds, alcohol compounds and the like.

(3) Method for producing a polyurethane foam

Fundamental constitution

The method for producing a polyurethane foam according to the present invention comprises the step of mixing a polyisocyanate with the premix composition for polyurethane foam of the present invention to thereby form a polyurethane foam.
The vapor pressure depressant of the present invention may also be premixed with the polyisocyanate.

Polyisocyanate

The polyisocyanate compound to be used may be selected without limitation from a wide variety of polyisocyanate compounds known as raw materials for polyurethane resins. The polyisocyanate compound can be aromatic, aliphatic, or alicyclic.
Specific examples of aromatic polyisocyanate compounds include aromatic polyisocyanate compounds having two or more isocyanate groups per molecule, such as 4,4'-diphenylmethane diisocyanate, 2,4-tolylene diisocyanate, 2,6-tolylene diisocyanate, naphthalene diisocyanate or polymethylene polyphenylene polyisocyanate (crude MDI), and their modified products in prepolymer forms.
Examples of alicylic polyisocyanate compounds include alicylic polyisocyanate compounds having two or more isocyanate groups per molecule, such as isophorone diisocyanate, and their modified products in prepolymer forms.
Examples of aliphatic polyisocyanate compounds include aliphatic polyisocyanate compounds having two or more isocyanate groups per molecule, such as hexamethylene diisocyanate, and their modified products in prepolymer forms.
Polyisocyanate compounds can be used either alone or in combination.
The amount of polyisocyanate to be used is not particularly limited. However, the amount corresponding to an isocyanate index of about 80 to about 130 is preferable, and the amount corresponding to an isocyanate index of about 90 to about 120 is more preferable. In a case where an isocyanurate-modified rigid polyurethane foam is to be

produced, the amount of the polyisocyanate corresponding to an isocyanate index of about 150 to about 300 is preferable, and the amount corresponding to an isocyanate index of about 170 to about 250 is more preferable. The term "isocyanate index" as used herein is defined as the percentage of the number of moles of isocyanate groups relative to the number of moles of active hydrogen groups contained in active hydrogencontaining compounds such as polyol components and water. For example, an isocyanate index of 150 indicates that there are 150 moles of isocyanate groups per 100 moles of active hydrogen groups.

Molding

A polyurethane foam is obtained by mixing the polyisocyanate with the premix composition of the present invention, and stirring the mixture by a known method to thereby cause foaming and curing. The method for molding or forming is not limited, and may be selected from known methods for forming rigid polyurethane foams, such as an injection method or a spray method.

The obtained polyurethane foam exhibits mechanical strength properties (e.g., flexural strength and compressive strength) that are comparative to those of polyurethane foams produced using a foaming agent known in the prior art in the absence of a vapor pressure depressant.

In the present invention, a rigid polyurethane foam may be an isocyanurate-modified rigid polyurethane foam. When the amount of polyisocyanate used in the above-described production method is relatively large, a partially-isocyanurate-modified rigid polyurethane foam is obtained.

(4) Foaming agent composition

The foaming agent composition of the present invention comprises: (A) HFC-245fa; and (B) at least one species selected from the group of compounds represented by the above-mentioned formula (1) and having a total acid content of 650 mg KOH or less as measured in accordance with MIL H-19457.

The ratio of (B) to (A) is generally about 0.1 to about 80 parts by weight of (B), preferably about 1 to about 50 parts by weight of (B), per 100 parts by weight of (A).

The foaming agent composition of the present invention may contain, in addition to HFC-245fa, another known foaming agent. Examples of such known foaming agents are supplemental foaming agents listed above, i.e., hydrocarbon foaming agents, fluorin-containing hydrocarbon foaming agents, fluorin-containing ether foaming agents and the like. When another foaming agent is used, its amount is preferably about 0.1 to about 80 parts by weight, more preferably about 1 to about 50 parts by weight, and further more preferably about 1 to about 30 parts by weight, per 100 parts by weight of HFC-245fa.

In addition to the vapor pressure depressant of the present invention, the foaming agent composition of the present invention may contain another depressant for reducing vapor pressure of HFC-245fa. Examples of such vapor pressure depressants are supplemental vapor pressure depressants listed earlier. its amount is preferably about 0.1 to about 80 parts by weight, more preferably about 1 to about 50 parts by weight, and further more preferably about 1 to about 40 parts by weight, per 100 parts by weight of HFC-245fa.

The foaming agent composition may be used as a solvent, aerosol propellant, coolant, foaming agent, etc. More particularly, the foaming agent composition may suitably be used as a foaming agent for plastic manufacture, and even more suitably as a foaming agent for isocyanurate-modified rigid polyurethane foam.

(5) Method for reducing the vapor pressure of 1,1,1,3,3-pentafluoropropane

A compound represented by formula (1) can effectively reduce the vapor pressure of 1,1,1,3,3-pentafluoropropane (HFC-245fa), and thus can be used as the HFC-245fa vapor pressure depressant.

The method for reducing the vapor pressure of HFC-245fa according to the present invention comprises mixing HFC-245fa with a compound represented by formula (1). The amount of compound represented by formula (1) to be used is preferably about 0.1 to about 80 parts by weight, more preferably about 1 to about 50 parts by weight, and further more preferably about 5 to about 45 parts by weight, per 100 parts by weight of HFC-245fa.

(6) Vapor pressure depressant composition

The vapor pressure depressant composition of the present invention comprises the vapor pressure depressant of the present invention, i.e., a compound represented by formula (1), and a supplemental vapor pressure depressant. The supplemental vapor pressure depressant may be selected from the group of compounds exemplified earlier, i.e., carbonates, ketones, esters, ethers, acetals, nitriles, amides, sulfoxides, and sulfolanes.

The ratio of the supplemental vapor pressure depressant to the vapor pressure depressant is preferably about

0.1 to about 100 parts by weight, more preferably about 1 to about 90 parts by weight, and further more preferably about 10 to about 80 parts by weight, per 100 parts by weight of the vapor pressure depressant.

EXAMPLES

The present invention will be described in further detail with reference to the Examples and Test Examples shown below, to which, however, the invention is not limited.

<Analysis concerning the hydrolytic resistance of the vapor pressure reducing agent >

Method for measuring the total acid content

The total acid content was measured in accordance with MIL H-19457, as detailed below.

In a pressure-resistant sample bottle were fed 75 g of a sample compound and 25 g of distilled water, and the bottle was sealed hermetically. The bottle was attached to a hydrolysis apparatus that was preset to 93°C and rotated 5 times per minute to mix the contents in the sample bottle. Then, the sample bottle was maintained at the same temperature for 48 hours, followed by cooling to room temperature. Subsequently, the mixture in the pressure-resistant sample bottle was transferred into a separatory funnel, left to stand, and the aqueous phase was collected. Then, about 100 g of distilled water was added to the oil phase as rinse water, gently shaked, and was left to stand. Thereafter, the aqueous phase was collected, and then mixed with the aqueous phase previously collected. The above procedure was repeated until the rinse water becomes neutral. The acid value of the mixture of all the aqueous phases collected was determined.

The acid value was calculated by the formula shown below, based on titer A (ml), i.e., the amount of a 0.5 N potassium hydroxide solution required to produce a red color when a sample S (g) from total aqueous phase was titrated with 0.5 N potassium hydroxide solution using a phenolphthalein indicator.

$$\text{Acid value (mg KOH/g)} = 0.5 \times 56.1 \times A / S$$

The total acid content was then calculated by the following formula:

$$\text{Total acid content (mg KOH)} = \text{Acid value (mg KOH/g)} \times W \text{ (g)}$$

wherein W represents the total weight of the all aqueous phases collected.

The measurement results are shown in Table 1 below.

Table 1

| Phosphate ester | Total acid content (mg KOH) |
|---|---|
| TNPP | 211 |
| TIPP | 599 |
| TIBP | 107 |
| TBP | 50 |
| TMP | 7570 |
| TEP | 889 |
| TMCPP | 50 |

The abbreviations used in Table 1 represent the following:

TNPP = tri-n-propyl phosphate,
TIPP = triisopropyl phosphate,
TIBP = triisobutyl phosphate,

TBP = tri-n-butyl phosphate,
TMP = trimethyl phosphate,
TEP = triethyl phosphate, and
TMCPP = tris(β-chloropropyl phosphate).

TBP, TMP and TMCPP were products of Daihachi Chemical Industry Co., Ltd. The others were reagents available in the market.

As is apparent from Table 1, TNPP, TIPP, TIBP and TBP, which are vapor pressure depressants of the present invention, have a total acid content of 650 mg KOH or less, and thus have excellent resistance against hydrolysis.

On the contrary, both TMP and TEP (Comparative Examples) have a total acid content exceeding 650 mg KOH, and thus exhibit low hydrolytic resistance. Although TMCPP has a total acid content of 50 mg KOH and thus exhibits high hydrolytic resistance, it is environmentally undesirable because it contains halogen.

<Examples of production of premix compositions>

Examples 1 to 8

To 100 weight parts of a mixture containing an ester-based polyol (OH value = 314 mg KOH/g, viscosity = 2,370 mPa·s at 25°C, trade name "Fantol PL-305", manufactured by Toho Rika Co., Ltd. and an ether-based polyol (OH value = 755 mg KOH/g, viscosity = 45,000 mPa·s at 25°C, trade name "Actcol AE-300", manufactured by Mitsui Takeda Chemicals, Inc.) at ester-based polyol/ether-based polyol weight ratio of 70:30 were added, with ice cooling: 15 weight parts of tri-n-propyl phosphate (TNPP) or triisobutyl phosphate (TIBP); 1 weight part of an organosilicon surfactant (trade name "SH-193", manufactured by Toray Silicone Co., Ltd.) as a foaming stabilizer; 2 weight parts of potassium acetate and 2 weight parts of PC-41 (triazine-based catalyst, N,N',N"-tris(dimethylaminopropyl)hexahydro-S-triazine, trade name "POLYCAT-41", manufactured by Sankyo Air Products Co., Ltd.) as curing catalysts; 2 weight parts of water as a foaming aid; and 50 weight parts of a foaming agent composition as shown in Table 2 below (including HFC-245fa as a foaming agent, a vapor pressure depressant, etc., but not counting TNPP and TIBP), whereby a premix solution was prepared.

Comparative Example 1

A premix solution was prepared in the same manner as in Examples 1 to 8, except that a pressure reductant was not used and only HFC-245fa was used as the foaming agent.

Test Example 1 (analysis of pressure reduction ratio

Vapor pressures of premix compositions of Examples 1 to 8 and Comparative Example 1 were measured by the method described below: The premix composition (50 g) was stored in a 50-ml pressure vessel made of glass and provided with a pressure sensor (VALCOM Pressure Transducer VPRNP-A4-1700 kPa(abs)-5) on its upper part, and then stirred by a magnetic stirrer in air. The vapor pressure was measured at a temperature of 50°C. Three hours after the start of the measurement, the vapor pressure at equilibrium (equilibrium vapor pressure) was measured.

Based on the vapor pressure measured, the pressure reduction ratios of Examples 1 to 8 were calculated according to the equation shown below:

$$\text{Pressure reduction ratio (\%)} = 100 \times (P_0 - P) / P_0$$

wherein $P_0$ represents the vapor pressure of the premix composition obtained by Comparative Example 1, in which 245fa was used alone, and P represents the vapor pressure of the composition subjected to the measurement.

The measurement results are given in Table 2 below.

Table 2

| | Foaming agent composition | | Vapor pressure (kPa) | Pressure reduction ratio (%) |
|---|---|---|---|---|
| | Foaming agent (+ Supplemental foaming agent) | Vapor pressure depressant (+ Supplemental vapor pressure depressant ) | | |
| Comp. Ex. 1 | HFC-245fa (100 wt. parts) | - | 386 | |
| Ex. 1 | HFC-245fa (100 wt. parts) | TNPP | 338 | 12 |
| Ex. 2 | HFC-245fa (100 wt. parts) | TIBP | 336 | 13 |
| Ex. 3 | HFC-245fa (90 wt. parts) | TNPP + Dimethylsulfoxide (10 wt. parts) | 302 | 22 |
| Ex. 4 | HFC-245fa (90 wt. parts) | TNPP + Dimethoxymethane (10 wt. parts) | 315 | 18 |
| Ex. 5 | HFC-245fa (90 wt. parts) + HFC-365mfc (10 wt. parts) | TNPP | 323 | 16 |
| Ex. 6 | HFC-245fa (90 wt. parts) + Cyclopentane (10 wt. parts) | TNPP | 343 | 11 |
| Ex. 7 | HFC-245fa (80 wt. parts) | TIBP + Dimethylsulfoxide (20 wt. parts) | 278 | 28 |
| Ex. 8 | HFC-245fa (80 wt. parts) | TNPP + Dimethylsulfoxide (15 wt. parts) + Dimethoxymethane (5 wt. parts) | 273 | 29 |

The abbreviations used in Table 2 represent the following:

HFC-365mfc = 1,1,1,3,3-pentafluorobutane
TNPP = tri-n-propyl phosphate
TIBP = triisobutyl phosphate

In Table 2, the numerical values enclosed in parentheses indicate the proportions of the components other than TNPP and TIBP in the foaming agent composition.

"Dimethylsulfoxide (10 wt. parts)", "Dimethoxymethane (10 wt. parts)", "HFC-365mfc" and "Cyclopentane" indicate that these components are contained in proportions of 10 weight %, respectively, in the foaming agent composition, not counting TNPP and TIBP. "Dimethylsulfoxide (20 wt. parts)" indicates that dimethylsulfoxide is contained in a proportion of 20 weight % in the foaming agent composition, not counting TNPP and TIBP. "Dimethylsulfoxide (15 wt. parts)" indicates that dimethylsulfoxide is contained in a proportion of 15 weight % in the foaming agent composition, not counting TNPP and TIBP. "Dimethoxymethane (5 wt. parts)" indicates that dimethoxymethane is contained in a proportion of 5 weight % in the foaming agent composition, not counting TNPP and TIBP.

TNPP or TIBP was directly added to the polyol in a proportion of 15 weight parts per 100 weight parts of the polyol.

As is clear from Table 2, the premix compositions of Examples 1 and 2, in which the vapor pressure reducing agent of the present invention, i.e., TNPP or TIBP was added to HFC-245fa, showed pressure reduction ratios of 12% and 13%, respectively, as compared with Comparative Example 1, which did not use a vapor pressure depressant. In other words, the pressure of the premix compositions of Examples 1 and 2 are reduced by 12% and 13%, respectively, as compared with Comparative Example 1.

Further, the premix compositions of Examples 3, 4, 7 and 8 which contain the supplemental vapor pressure reducing agent of the present invention in addition to TNPP or TIBP showed further greater pressure reduction ratios compared with the premix compositions of Examples 1 and 2. The vapor pressures of the compositions of these examples were in the range of 273 to 315 kPa, which are nearly equivalent to the vapor pressure obtained when HCFC-141c is used as a foaming agent, and thus are sufficiently low for practical use.

The premix composition of Example 5, which used HFC-365mfc as a supplemental foaming agent as well as HFC-245fa as a foaming agent, and the premix composition of Example 6, which used cyclopentane as a supplemental foaming agent as well as HFC-245fa as a foaming agent, achieved pressure reduction ratios that were equivalent to that achieved with the premix composition of Example 1, which did not use a supplemental foaming agent. These results demonstrate that when a supplemental foaming agent is used together with a foaming agent, the vapor pressure of HFC-245fa is reduced to the same level of the vapor pressure as achieved when a supplemental foaming agent is not used with a foaming agent.

Examples 9 to 15

To 100 weight parts of a mixture containing an ester-based polyol (OH value = 314 mg KOH/g, viscosity = 2,370 mPa·s at 25°C, trade name "Fantol PL-305(?)", manufactured by Toho Rika Co., Ltd. and a polyether polyol (OH value = 467 mg KOH/g, viscosity = 3,300 mPa·s at 25°C, manufactured by Sumika Bayer Urethane Co., Ltd.) at an ester-based polyol/polyether polyol weight ratio of 70:30 were added, with ice cooling: 1 weight part of a foaming stabilizer (trade name "SH-193", manufactured by Toray Silicone Co., Ltd.); 2 weight parts of potassium acetate and 2 weight parts of PC-41 (triazine-based catalyst, N,N',N''-tris(dimethylaminopropyl)hexahydro-S-triazine, trade name "POLYCAT-41", manufactured by Sankyo Air Products Co., Ltd.) as curing catalysts; 2 weight parts of water as a foaming aid; and 50 weight parts of a foaming agent composition shown in Table 3 below (including HFC-245fa as a foaming agent, a vapor pressure depressant, etc., but not counting TNPP and TIBP), whereby a premix solution was prepared. TNPP or TIBP was directly added to the polyol in an amount of 15 weight parts per 100 weight parts of the polyol.

Comparative Example 2

A premixed composition was prepared in the same manner as in Examples 9 to 15, except that a vapor pressure depressant was not used and only HFC-245fa was used as the foaming agent, and that TMCPP (tris(2-chloropropyl) phosphate, manufactured by DAIHACHI CHEMICAL INDUSTRY CO., LTD.) was used as a flame retardant in an amount of 15 weight parts per 100 weight parts of the polyol.

Test Example 2 (analysis of foaming property)

The premix composition of each of Examples 9 to 15 and Comparative Example 2 (100 weight parts) was mixed with 116 weight parts of an isocyanate (trade name "Cosmonate M-200", manufactured by Mitsui Takeda Chemicals, Inc.). The mixture was stirred, and then gelation-time and rise-time of them were measured. Here, the gelation-time means the time required to form the mixture of premixed composition and isocyanate into a gel, i.e., the time elapsed since the premix composition and the isocyanate were mixed until the forming resin became tacky such that, when the surface of the forming resin was pricked by a needle-like rod, the resin remained adhered to the rod by forming a thread. The shorter the gelation-time, the superior the foaming property. The rise-time means the time required for foaming to stop. The shorter the rise time, the superior the foaming property.

The measurement results are shown in Table 3 below.

Table 3

| | Foaming agent composition | | Gela tion time (sec) | Rise time (sec) |
|---|---|---|---|---|
| | Foaming agent (+ Supplemental foaming agent) | Vapor pressure depressant (+ Supplemental vapor pressure depressant) | | |
| Comp. Ex. 2 | HFC-245fa (100 wt. parts) | - (Flame retardant: TMCPP) | 30 | 52 |
| Ex. 9 | HFC-245fa (100 wt. parts) | TNPP | 30 | 52 |
| Ex. 10 | HFC-245fa (100 wt. parts) | TIBP | 31 | 53 |
| Ex. 11 | HFC-245fa (90 wt. parts) | TNPP + Dimethylsulfoxide (10 wt. parts) | 29 | 50 |
| Ex. 12 | HFC-245fa (90 wt. parts) | TNPP + Dimethoxymethane (10 wt. parts) | 32 | 53 |
| Ex. 13 | HFC-245fa (90 wt. parts) + HFC-365mfc (10 wt. parts) | TNPP | 32 | 52 |
| Ex. 14 | HFC-245fa (90 wt. parts) + Cyclopentane (10 wt. parts) | TNPP | 31 | 52 |
| Ex. 15 | HFC-245fa (90 wt. parts) | TIBP + Dimethylsulfoxide (10 wt. parts) | 31 | 52 |

According to Table 3, dimethylsulfoxide, dimethoxymethane, 1,1,1,3,3-pentafluorobutane (HFC-365mfc) or cyclopentane may be contained in the foaming agent composition in a proportion of 10 weight %.

In Table 3, the numerical values enclosed in parentheses indicate the proportions of the compositions contained in the foaming agent composition.

TNPP or TIBP was directly added to the polyol in an amount of 15 weight parts per 100 weight parts of the polyol.

As is evident from Table 3, the premix compositions of Examples 9 and 10, each of which contains the vapor pressure depressant of the present invention together with HFC-245fa as a foaming agent exhibited foaming properties that were equivalent to that of the premix composition of Comparative Example 2, which did not contain such a vapor pressure depressant, but instead contain TMCPP, i.e., a compound that has been used as a flame retardant in the prior art. Further, the premix compositions of Examples 13 and 14, each of which used a supplemental foaming agent, and the premixed compositions of Examples 11, 12, and 15, each of which used a supplemental vapor pressure depressant, exhibited foaming properties that were equivalent to that of the premixed composition of Comparative Example 2. These results demonstrate that the supplemental foaming agent and the supplemental vapor pressure reducing agent did not interfere with the foaming reaction caused by HFC-245fa.

Industrial Applicability

The vapor pressure reducing agent of the present invention can effectively reduce the vapor pressure of HFC-245fa, which is useful as a foaming agent for rigid polyurethane foams or isocyanurate-modified rigid polyurethane foams. Owing to this characteristic, the vapor pressure reducing agent may suitably be used as an additive to a premix composition for polyurethane foam that contains HFC-245fa. The vapor pressure reducing agent of the present invention may also suitably be used as an additive to HFC-245fa.

## Claims

1. An agent for reducing vapor pressure of 1,1,1,3,3-pentafluoropropane, comprising at least one compound represented by the following formula (1):

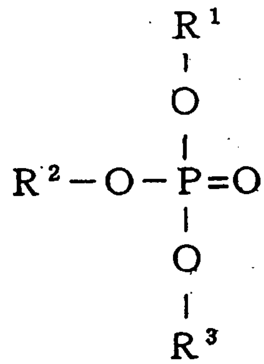

wherein $R^1$, $R^2$ and $R^3$ represent a straight-chain alkyl group or branched-chain alkyl group having 2 to 5 carbon atoms, $R^1$, $R^2$ and $R^3$ may be the same or different, with the proviso that the compound wherein $R^1$, $R^2$ and $R^3$ are all ethyl groups is excluded, the compound having a total acid content of 650 mg KOH or less as measured in accordance with MIL H-19457.

2. The agent according to claim 1, wherein the compound represented by formula (1) is at least one species selected from the group consisting of poly-n-propyl phosphate, tri-n-butyl phosphate, tri-n-pentyl phosphate, tri-iso-propyl phosphate, tri-iso-butyl phosphate, tri-sec-butyl phosphate, tri-tert-butyl phosphate, tri-iso-pentyl phosphate, tri-sec-pentyl phosphate, trineopentyl phosphate, ethyldi(n-propyl) phosphate, ethyldi(iso-propyl) phosphate, ethyldi (n-butyl) phosphate, ethyldi(iso-butyl) phosphate, ethyldi(sec-butyl) phosphate, ethyldi(tert-butyl) phosphate, ethyldi(n-pentyl) phosphate, ethyldi(iso-pentyl) phosphate, ethyldi(sec-pentyl) phosphate, ethyldi(neopentyl) phosphate, diethyl-n-propyl phosphate, diethyl-n-butyl phosphate, diethyl-iso-butyl phosphate, diethyl-sec-butyl phosphate, diethyl-tert-butyl phosphate, diethyl-n-pentyl phosphate, diethyl-iso-pentyl phosphate, diethyl-sec-pentyl phosphate, diethylneopentyl phosphate, n-propyldi(iso-propyl) phosphate, di(n-propyl)iso-propyl phosphate, n-propyldi(n-butyl) phosphate, di(n-propyl)n-butyl phosphate, n-propyldi(iso-butyl) phosphate, di(n-propyl)iso-butyl phosphate, n-propyldi(sec-butyl) phosphate, di(n-propyl)sec-butyl phosphate, n-propyldi(tert-butyl) phosphate, di (n-propyl)tert-butyl phosphate, n-propyldi(n-pentyl) phosphate, di(n-propyl)n-pentyl phosphate, n-propyldi(iso-pentyl) phosphate, di(n-propyl)iso-pentyl phosphate, n-propyldi(sec-pentyl) phosphate, di(n-propyl)sec-pentyl phosphate, n-propyldi(neopentyl) phosphate, di(n-propyl)neopentyl phosphate, iso-propyldi(n-butyl) phosphate, di(iso-propyl)n-butyl phosphate, iso-propyldi(iso-butyl) phosphate, di(iso-propyl)iso-butyl phosphate, iso-propyldi (sec-butyl) phosphate, di(iso-propyl)sec-butyl phosphate, iso-propyldi(tert-butyl) phosphate, di(iso-propyl)tert-butyl phosphate, iso-propyldi(n-pentyl) phosphate, di(iso-propyl)n-pentyl phosphate, iso-propyldi(iso-pentyl) phosphate, di(iso-propyl)iso-pentyl phosphate, iso-propyldi(sec-pentyl) phosphate, di(iso-propyl)sec-pentyl phosphate, iso-propyldi(neopentyl) phosphate, di(iso-propyl)neopentyl phosphate, n-butyldi(iso-butyl) phosphate, di(n-butyl) iso-butyl phosphate, n-butyldi(sec-butyl) phosphate, di(n-butyl)sec-butyl phosphate, iso-butyldi(sec-butyl) phosphate, and di(iso-butyl)sec-butyl phosphate.

3. The agent according to claim 1, wherein the compound represented by formula (1) is one species selected from the group consisting of tri-n-propyl phosphate, tri-n-butyl phosphate, tri-iso-propyl phosphate, tri-iso-butyl phosphate, tri-sec-butyl phosphate, ethyldi(n-propyl) phosphate, ethyldi(n-butyl) phosphate, ethyldi(iso-butyl) phosphate, ethyldi(sec-butyl) phosphate, n-propyldi(iso-propyl) phosphate, di(n-propyl)iso-propyl phosphate, n-propyldi(n-butyl) phosphate, di(n-propyl)n-butyl phosphate, n-propyldi(iso-butyl) phosphate, di(n-propyl)iso-butyl phosphate, n-propyldi(sec-butyl) phosphate, di(n-propyl)sec-butyl phosphate, iso-propyldi(n-butyl) phosphate, di(iso-propyl)n-butyl phosphate, iso-propyldi(iso-butyl) phosphate, di(iso-propyl)iso-butyl phosphate, iso-propyldi(sec-butyl) phosphate, di(iso-propyl)sec-butyl phosphate, n-butyldi(iso-butyl) phosphate, di(n-butyl)iso-butyl phosphate, n-butyldi(sec-butyl) phosphate, di(n-butyl)sec-butyl phosphate, iso-butyldi(sec-butyl) phosphate, and di(iso-butyl)sec-butyl phosphate.

4. A premix composition for producing polyurethane foam, comprising a polyol, a curing catalyst, 1,1,1,3,3-pentafluoropropane, a foaming stabilizer, and the vapor pressure reducing agent of claim 1.

**5.** The premix composition for producing polyurethane foam according to claim 4, further comprising at least one supplemental vapor pressure reducing agent selected from the group consisting of carbonates, ketones, esters, ethers, acetals, nitriles, amides, sulfoxides, and sulfolanes.

**6.** The premix composition for producing polyurethane foam according to claim 5, wherein the supplemental vapor pressure reducing agent is at least one compound selected from the group consisting of dimethylsulfoxide, tetrahydrofuran, 1,3-dioxolane, and dimethoxymethane.

**7.** The premix composition for producing polyurethane foam according to claim 4, further comprising a supplemental foaming agent selected from the group consisting of a hydrocarbon foaming agent, a fluorine-containing hydrocarbon foaming agent, and a fluorine-containing ether foaming agent.

**8.** The premix composition for producing polyurethane foam according to claim 7, wherein the supplemental foaming agent is at least one compound selected from the group consisting of n-pentane, isopentane, cyclopentane, 2-methylpentane, 3-methylpentane, n-hexane, cyclohexane, 1,1,1,3,3-pentafluorobutane, methoxy-heptafluoropropane, and methoxy-1,1,2,2-tetrafluoroethane.

**9.** The premix composition for producing polyurethane foam according to claim 4, further comprising water.

**10.** A method for producing a polyurethane foam, comprising the step of mixing a polyisocyanate with the premix composition according to claim 4 to form a polyurethane foam.

**11.** The method for producing a polyurethane foam according to claim 10, wherein the premix composition for producing polyurethane foam further comprises at least one supplemental vapor pressure reducing agent selected from the group consisting of carbonates, ketones, esters, ethers, acetals, nitriles, amides, sulfoxides, and sulfolanes.

**12.** The method for producing a polyurethane foam according to claim 11, wherein the supplemental vapor pressure reducing agent is at least one compound selected from the group consisting of dimethylsulfoxide, tetrahydrofuran, 1,3-dioxolane, and dimethoxymethane.

**13.** The method for producing a polyurethane foam according to claim 10, wherein the premix composition for producing polyurethane foam further comprises at least one supplemental foaming agent selected from the group consisting of a hydrocarbon foaming agent, a fluorine-containing hydrocarbon foaming agent, and a fluorine-containing ether foaming agent.

**14.** The method for producing a polyurethane foam according to claim 13, wherein the supplemental foaming agent is at least one compound selected from the group consisting of n-pentane, isopentane, cyclopentane, 2-methylpentane, 3-methylpentane, n-hexane, cyclohexane, 1,1,1,3,3-pentafluorobutane, methoxy-heptafluoropropane, and methoxy-1,1,2,2-tetrafluoroethane.

**15.** The method for producing a polyurethane foam according to claim 10, wherein the premix composition for producing polyurethane foam further comprises water.

**16.** A foaming composition comprising: (A) 1,1,1,3,3-pentafluoropropane; and (B) at least one compound represented by the following formula (1):

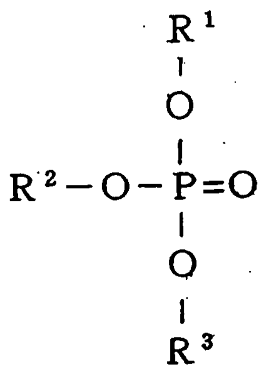

wherein $R^1$, $R^2$ and $R^3$ represent a straight-chain alkyl group or branched-chain alkyl group having 2 to 5 carbon atoms, $R^1$, $R^2$ and $R^3$ may be the same or different, with the proviso that the compound wherein $R^1$, $R^2$ and $R^3$ are all ethyl groups is excluded, the compound having a total acid content of 650 mg KOH or less as measured in accordance with MIL H-19457.

**17.** A 1,1,1,3,3-pentafluoropropane vapor pressure reducing composition, comprising:

a compound represented by the following formula (1):

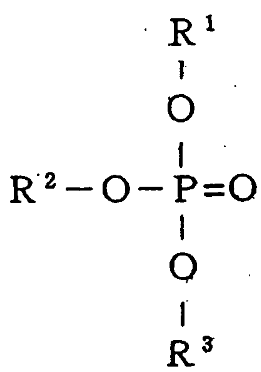

wherein $R^1$, $R^2$ and $R^3$ represent a straight-chain alkyl group or branched-chain alkyl group having 2 to 5 carbon atoms, $R^1$, $R^2$ and $R^3$ may be the same or different, with the proviso that the compound wherein $R^1$, $R^2$ and $R^3$ are all ethyl groups is excluded, the compound having a total acid content of 650 mg KOH or less as measured in accordance with MIL H-19457; and

at least one supplemental vapor pressure reducing agent selected from the group consisting of carbonates, ketones, esters, ethers, acetals, nitriles, amides, sulfoxides, and sulfolanes.

**18.** The composition according to claim 17, wherein the supplemental vapor pressure reducing agent is at least one compound selected from the group consisting of dimethylsulfoxide, tetrahydrofuran, 1,3-dioxolane, and dimethoxymethane.

**19.** The composition according to claim 17, wherein the supplemental vapor pressure reducing agent is contained in an amount of 0.1 to 100 parts by weight per 100 parts by weight of the compound represented by formula (1) .

**INTERNATIONAL SEARCH REPORT**

International application No.
PCT/JP03/14324

A. CLASSIFICATION OF SUBJECT MATTER
Int.Cl⁷ C09K3/00, C08J9/14, C08G18/00

According to International Patent Classification (IPC) or to both national classification and IPC

B. FIELDS SEARCHED

Minimum documentation searched (classification system followed by classification symbols)
Int.Cl⁷ C09K3/00, C08J9/14, C08G18/00-18/87

Documentation searched other than minimum documentation to the extent that such documents are included in the fields searched

Electronic data base consulted during the international search (name of data base and, where practicable, search terms used)
CA(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | WO 99/5204 A1 (IMPERIAL CHEMICAL INDUSTRIES PLC.), 04 February, 1999 (04.02.99), & EP 1023367 A1 & US 2002/13379 A1 | 1-19 |
| A | WO 91/14732 A1 (E.I.DU PONT DE NEMOURS AND CO.), 03 October, 1991 (03.10.91), & EP 527138 A1 & US 5439947 A & JP 5-505205 A | 1-19 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 February, 2004 (10.02.04) | 24 February, 2004 (24.02.04) |
| Name and mailing address of the ISA/ Japanese Patent Office | Authorized officer |
| Facsimile No. | Telephone No. |

Form PCT/ISA/210 (second sheet) (July 1998)